Europäisches Patentamt

(19) European Patent Office

Office européen des brevets

(11) Veröffentlichungsnummer: **0 004 860**
A1

## (12) EUROPÄISCHE PATENTANMELDUNG

(21) Anmeldenummer: 79100584.6

(22) Anmeldetag: 27.02.79

(51) Int. Cl.²: **F 24 D 3/00**
F 16 L 3/24, F 16 B 7/08

(30) Priorität: 24.04.78 DE 2817902

(43) Veröffentlichungstag der Anmeldung:
31.10.79 Patentblatt 79/22

(84) Benannte Vertragsstaaten:
BE FR NL

(71) Anmelder: MVH - Metallvertrieb GmbH
Bertholdstrasse 18
D-8000 München 40(DE)

(72) Erfinder: Letnanski, Ota
Grenzstrasse
Amriswil(CH)

(74) Vertreter: Skuhra, Udo, Dipl.-Ing.
Richard-Strauss-Strasse 9D-8000 München 80
D(DE)

(54) Halterung aus Kunststoff zur Verlegung von Rohren, insbesondere Heizungsrohren.

(57) Bei einer Halterung aus Kunststoff, insbesondere zur Verlegung und Befestigung von Rohren von Fußbodenheizungen auf Fußböden, sind mehrere auf ihrer Oberseite ein Rohr (2) aufnehmende Halter (1) vorgesehen, die in Abständen an einem Trägerelement (3) lösbar befestigt sind. Die Halter (1) weisen Schenkel (4, 5) auf, welche das Trägerelement (3) klemmend umgreifen. Die Trägerelemente (3) sind Leisten, wobei die Schenkel (4, 5) der Halter (1) die Leistenkanten (3a) der Leisten (3) umgreifen. An den Leisten (3) sind entlang den Leistenkanten (3a) Rastvorsprünge und/oder -ausnehmungen (7, 8, 9, 10) vorgesehen, während die Schenkel (4, 5) der Halter (1) an den den Leistenkanten entsprechenden Bereichen Rastvorsprünge und/oder -ausnehmungen (4b, 5c, 6b) aufweisen.

EP 0 004 860 A1

- 1 -

Halterung aus Kunststoff zur Verlegung von Rohren,

insbesondere Heizungsrohren

Die Erfindung betrifft eine Halterung aus Kunststoff zur Verlegung von Rohren, insbesondere Heizungsrohren, auf Flächen, insbesondere auf Fußböden, bei der mehrere Halter, die auf ihrer Oberseite jeweils ein Rohr klemmend aufnehmen, in Abständen an einer Leiste dadurch lösbar befestigt sind, daß sie mit sich seitlich der Leiste erstreckenden Schenkeln die Leistenkanten klemmend mit sich gegen eine zugeordnete Fläche der Leistenkanten anpressenden Vorsprüngen umgreifen.

Halterungen der eingangs genannten Art werden insbesondere zur Verlegung von Heizungsrohren bei Fußbodenheizungen eingesetzt; als Heizungsrohre werden dabei in der Regel Kunststoffrohre verwendet. Diese Heizungsrohre müssen in bestimmten Anordnungen und Abständen verlegt werden, bis sie im Estrich eingebettet werden. Mit den bekannten Halterungen werden die Halter jeweils nach der gewünschten Anordnung und in den gewünschten Abständen auf der Leiste klemmend befestigt. Bei den bekannten Halterungen werden einfache flache Leisten verwendet, die auch mit in Längsrichtung verlaufenden Profilen versehen sein können. Die Halter werden dabei klemmend auf die Leistenkanten aufgesetzt. Um den spezifi-

schen Druck zwischen Halterschenkel und Leistenkante zu erhöhen, werden auch bereits die Halterschenkel auf ihrer der Seitenfläche der Leistenkante zugekehrten Fläche mit nockenartigen Vorsprüngen versehen. Es hat sich jedoch gezeigt, daß diese Erhöhung des spezifischen Drucks zur Vermeidung ungewollter Lageänderungen und auch zur Überwindung unvermeidlicher größerer Toleranzen nicht ausreicht und trotzdem eine verhältnismäßig starke Klemmung zwischen den Haltern und der Leiste erforderlich war. Diese starke Klemmung erschwert die Montage und behindert eine gewollte Lageänderung zur Abstandsveränderung wesentlich.

Der Erfindung liegt die Aufgabe zugrunde, eine Halterung gemäß dem Oberbegriff des Hauptanspruchs zu schaffen, bei der die Klemmung der Halterschenkel an der Leiste wesentlich verringert werden kann, um so einerseits die Montage und andererseits eine gewollte Lageänderung zu erleichtern und trotzdem eine sichere Festlegung der Halter an der Leiste auch gegen ungewollte Lageänderungen zu ermöglichen.

Diese Aufgabe wird erfindungsgemäß dadurch gelöst, daß die Leistenkanten auf ihrer Länge verteilt in ihrem von den Halterschenkeln erfaßten Bereich einerseits und die Halterschenkel in ihrem die Leistenkanten erfassenden Bereich andererseits mit einander zugeordneten, insbesondere zueinander komplementären, Rastvorsprüngen und/oder -ausnehmungen versehen sind, die nach dem Aufsetzen des Halters auf die Leiste ineinandergreifen.

Durch die zusammenwirkenden Vorsprünge und Ausnehmungen wird bei verringerter Klemmkraft erreicht, daß die Halter stets sicher an der gewollten Stelle und damit in den gewollten Abständen an der Leiste festgelegt sind, jedoch eine gewollte
Lageänderung mit geringen Kräften ausgeführt werden kann. Bei
gesicherter Lage der Halter an der Leiste werden die Montage
und gewollte Lageänderungen erheblich erleichtert und vereinfacht. Die Vorsprünge an den Halterschenkeln können an den jeweils zweckmäßigen oder auch an allen Anlageflächen vorgesehen
sein, nämlich an den der Seitenfläche der Leistenkanten und/oder
an den der Ober- und Unterseite der Leistenkante zugekehrten
Anlageflächen der Halterschenkel. Entsprechendes gilt für die
von den Halterschenkeln erfaßten Flächen der Leistenkanten und
deren Vorsprünge und Ausnehmungen. Es treten in jeder Klemmstellung die Vorsprünge der Halterschenkel mit den Rastvorsprüngen
oder Rastausnehmungen der Leistenkanten in Eingriff. Hierdurch
kann die erforderliche Klemmkraft noch erheblich reduziert
werden, so daß die Montage und die Demontage erleichtert werden,
zugleich aber ungewollte Lageänderungen sicher ausgeschlossen
werden.

Nach einer weiteren Ausführungsform der Erfindung sind die
Leistenkanten auf ihrer Ober- und Unterseite und die zugeordneten Anlageflächen der Halterschenkel jeweils mit Nocken versehen, welche Nocken also zur Sicherung der Lage der Halter zusammenwirken. Es können aber auch in weiterer Ausbildung der
Erfindung die Leistenkanten auf ihrer Ober- und Unterseite mit
Rastausnehmungen und die zugeordneten Anlageflächen der Halterschenkel mit in die Rastausnehmungen eintretenden Rastnocken
versehen sein, so daß also Rastnocken und Rastausnehmungen ineinandergreifen und so die Lage der Halter an der Leiste sichern.
Ferner ist es in weiterer Ausgestaltung der Erfindung möglich,
daß die Seitenflächen der Leistenkanten auf ihrer Länge mit
einer regelmäßigen Wellung oder Zahnung und die zugeordnete Anlagefläche der Halterschenkel mit Rastnocken versehen sind,
wodurch wiederum Rastnocken und Wellentäler bzw. Zahnungstäler
miteinander in Eingriff stehen, wenn die Halter auf die Leiste
aufgesetzt werden. Bei allen diesen Ausführungsformen sind nur
verhältnismäßig geringe Klemmkräfte erforderlich, um die Halter
über die Halterschenkel sicher in der gewollten Lage an der Leiste
zu halten, zugleich aber eine leichte Montage und Demontage zu
ermöglichen.

Nach einer weiteren Ausführungsform der Erfindung untergreifen
die Halterschenkel die Leistenkanten mit einem sich in Leistenlängsrichtung erstreckenden Steg. Die Halterschenkel liegen somit an der Oberseite der Leistenkante sicher auf und werden ebenso sicher in der Lage gehalten durch den untergreifenden Steg,
der erhöhte Elastizität erhalten kann. Zweckmäßig trägt dabei
dieser Steg auf seiner Oberseite Rastnocken, die die gewünschte
Lagearretierung erreichen bzw. unterstützen.

Zweckmäßig sind sowohl die Halter als auch die Leiste mit ihren
Bestandteilen und insbesondere mit ihren Vorsprüngen bzw. Rastnocken einstückig aus Kunststoff geformt, dessen Elastizität
entsprechend den jeweiligen Anwendungsfällen gewählt werden kann.

Weitere Merkmale, Einzelheiten und Vorteile der Erfindung ergeben
sich aus den Ansprüchen und aus der nachfolgenden Beschreibung
mehrerer Ausführungsbeispiele der Erfindung anhand der Zeichnung. Es zeigen:

Fig. 1 eine Seitenansicht einer Halterung nach der Erfindung mit
       geschnittener Leiste und eingesetztem Rohr,

Fig. 2a bis 2c eine Seitenansicht sowie zwei Schnittansichten
    entsprechend den Linie A-A bzw. B-B in Fig. 2a eines
    Halters der Halterung nach der Erfindung mit zwei Aus-
    führungsformen der Rastnocken an den Halterschenkeln, und

Fig. 3 bis 6 Aufsichten und Schnittansichten verschiedener Aus-
    führungsformen der Leiste der Halterung nach der Erfindung.

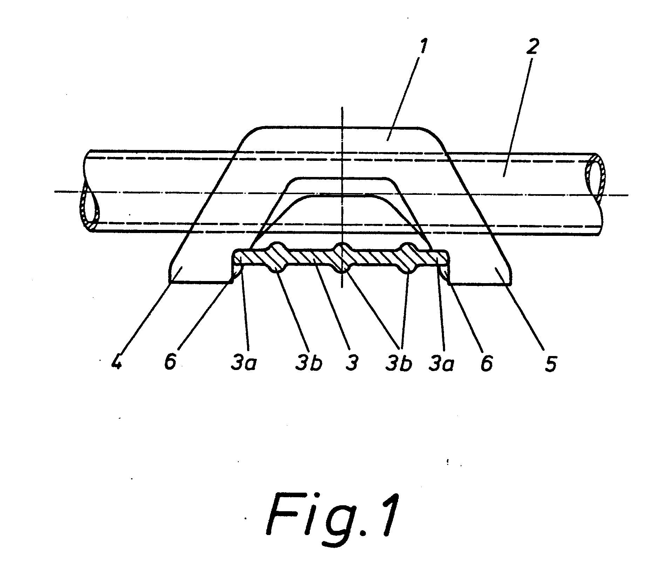

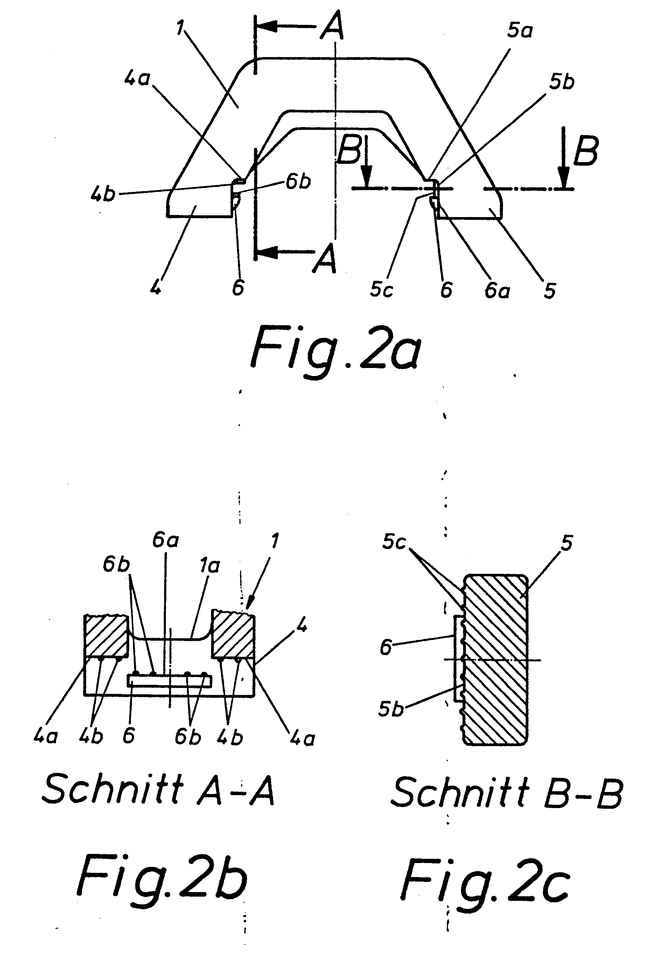

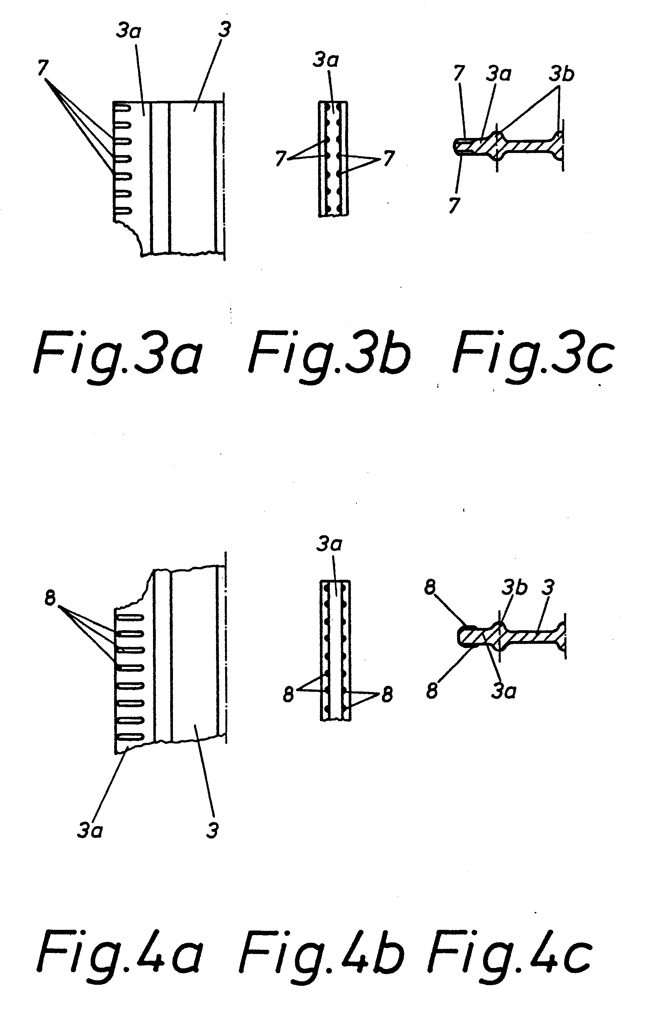

Fig. 1 zeigt den Grundaufbau einer Halterung nach der Erfindung.
Mehrere Halter 1 nehmen in einer geeigneten maulförmigen Öffnungauf ihrer Oberseite, die in Fig. 2b mit 1a bezeichnet ist,
jeweils ein Rohr 2 klemmend auf. Die Halter 1 sind in Abständen
an einer Leiste 3 dadurch lösbar befestigt, daß diese Halter 1
mit sich seitlich der Leiste 3 erstreckenden Schenken 4 und 5
die Kanten 3a der Leisten klemmend umgreifen. Die Leisten 3
werden vorzugsweise mit Versteifungsrippen 3b versehen, wie
in Fig. 1 und 3 dargestellt ist.

Die Fig. 2a bis 2c zeigen verschiedene Ausführungsformen der
Erfindung, wobei Einzelheiten im Bereich des Halterschenkels 4
und Halterschenkels 5 veranschaulicht sind. Bei beiden Ausführungsformen sind die Halterschenkel so ausgebildet, daß sie die Seitenkanten 3a der später noch beschriebenen Leiste 3 umgreifen. Wie
insbesondere aus Fig. 2b hervorgeht, sind unterhalb der die
maulförmige Öffnung 1a bildenden oberen Schenkelteile obere
Anlageflächen 4a bzw. 5a ausgebildet, sowie eine untere Anlagefläche 6a durch einen an die Halterschenkel 4 bzw. 5 angeformten Steg 6.

Bei der in Fig. 2a und 2b dargestellten Ausführungsform sind am Halterschenkel 4 auf den Anlageflächen 4a bzw. 6a jeweils über die Länge verteilt angeordnete Rastnocken 4b bzw. 6b vorgesehen und vorzugsweise angeformt. Wird ein Halter 1 mit zwei derart ausgebildeten Halterschenkeln in der in Fig. 1 dargestellten Weise auf die Leiste 3 klemmend aufgesetzt, so werden die Nocken 4b bzw. 6b gegen die zugehörigen Anlageflächen der Leistenkanten 3a angepreßt.

Bei der in Fig. 2a und 2c dargestellten Ausführungsform ist die der Seitenfläche der Leistenkante 3a zugekehrte Anlagefläche 5b des Halterschenkels 5 mit nockenförmigen Vorsprüngen 5c versehen. Wird ein an beiden Halterschenkeln 4, 5 gemäß vorstehender Beschreibung ausgebildeter Halter 1 auf die Leistenkanten 3a entsprechend Fig. 1 aufgesetzt, so werden die Vorsprünge oder Nocken 5c gegen die Seitenfläche der Leistenkante 3a gepreßt. Die Rastnocken 4b und 6b können somit entweder an nur einem Schenkel oder an beiden Schenkeln 4, 5 entsprechend der Darstellung nach Fig. 2b vorgesehen werden.

Die Fig. 3 bis 6 zeigen Einzelheiten verschiedener Ausführungsformen der Erfindung bezüglich der Leiste 3. Die Leistenkanten 3a sind in verschiedener Weise ausgebildet und können dadurch mit den Halterschenkeln 4 bzw. 5 der Halter 1 zusammenwirken. Die im folgenden beschriebenen Fig. 3a bis 6a sind Aufsichten, die Fig. 3b bis 6b Seitenansichten und die Fig. 3c bis 5c Schnittansichten bevorzugter Ausführungsformen von Leisten 3 bzw. deren Kanten 3a.

Bei den in Fig. 3a, 3b und 3c dargestellten Ausführungsformen ist die Ober- und die Unterseite der Leistenkanten 3a mit Rastausnehmungen 7 versehen. Die Rastausnehmungen 7 nehmen beim Einsatz der in Fig. 2b gezeigten Ausführungsform der Halter 1 die am Schenkel 4 oben und unten angeordneten Rastnocken 4b bzw. 6b auf, wodurch bei verhältnismäßig geringer Klemmkraft eine sichere Festlegung der Halter 1 auf der Leiste 3 in der jeweils gewünschten Lage erreicht wird.

Bei der Ausführungsform gemäß Fig. 4a, 4b und 4c sind die Seitenkanten 3a der Leiste 3 auf der Ober- und der Unterseite mit Rastvorsprüngen 8 versehen, die entlang der Leiste verteilt sind. Diese Rastvorsprünge 8 wirken ebenfalls in geeigneter Weise mit den Rastnocken 4b bzw. 6b des Schenkels 4 (Fig. 2a) und/oder des Schenkels 5 (Fig. 2c) zusammen, wodurch eine sichere Festlegung der Halter 1 auf der Leiste 3 in der jeweils gewünschten Lage bei geringstmöglicher Klemmkraft erzielbar ist.

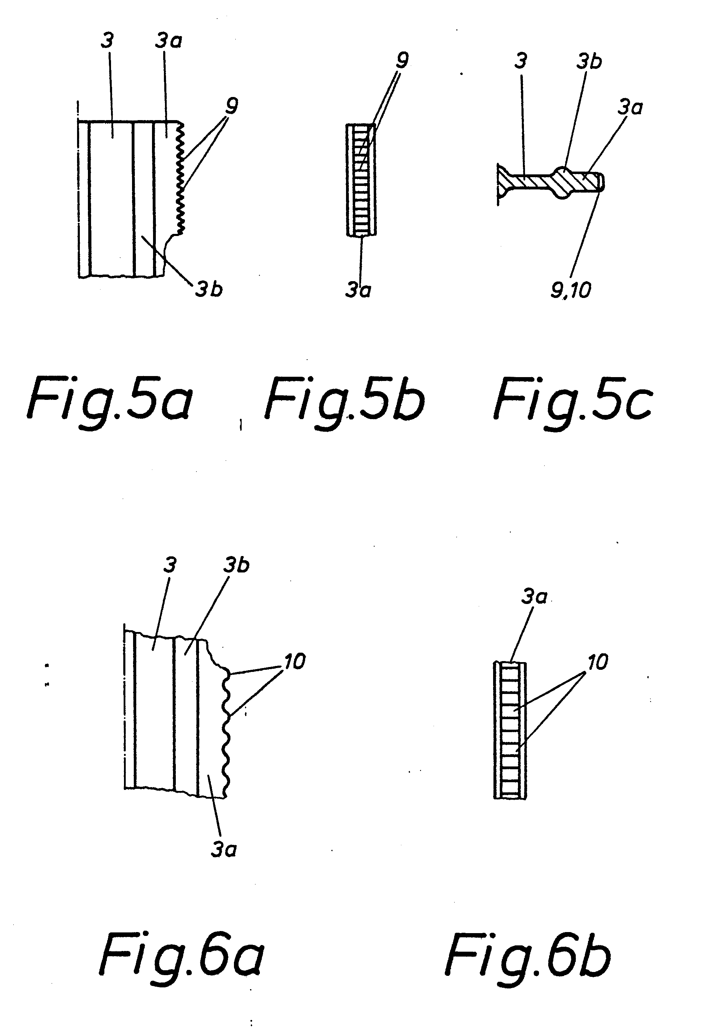

Bei der Ausführungsform gemäß Fig. 5a, 5b und 5c ist die Seitenfläche der Seitenkanten 3a der Leiste 3 mit einer spitzen Verzahnung 9 versehen, die mit jeder Ausführungsform der Halter 1 gemäß Fig. 2a bis 2c zusammenwirken kann, insbesondere aber mit der Ausführungsform nach Fig. 2c, bei welcher der Schenkel 5 mit Vorsprüngen 5c versehen ist, die vorzugsweise im wesentlichen parallel zueinander und in Vertikalrichtung (Fig. 2a) verlaufen. Diese Vorsprünge können ebenfalls an den Schenkeln 4 ausgebildet sein. Dies bedeutet, daß einer oder beide Schenkel die Vorsprünge 4b, 6b und/oder 5c aufweisen kann. Bei der Ausführungsform nach Fig. 6a und 6b ist eine vorzugsweise gleichmäßige Wellung 10 an der Seitenfläche der Seitenkanten 3a der Leiste 3 vorgesehen,

0004860

die ähnlich der in Verbindung mit Fig. 5a bis 5c beschriebenen Ausführungsform in der dort geschilderten Weise mit der entsprechenden Ausbildung der Halterschenkel 4 bzw. 5 der Halter 1 zusammenwirkt.

Abhängig von den Anwendungsfällen und den jeweils zu erreichenden Arretierungsaufgaben können die verschiedenen beschriebenen Ausführungsformen der Halterschenkel 4 bzw. 5 einerseits und der Seitenkanten 3a der Leiste 3 andererseits einzeln angewandt oder miteinander kombiniert werden.

- 1 -

Patentansprüche

1. Halterung aus Kunststoff zur Verlegung von Rohren, insbesondere Heizungsrohren, auf Flächen, insbesondere Fußböden, bei der mehrere Halter, die auf der Oberseite jeweils ein Rohr klemmend aufnehmen, in Abständen an einer Leiste dadurch lösbar befestigt sind, daß sie mit sich seitlich der Leiste erstreckenden Schenkeln die Leistenkanten klemmend mit sich gegen eine zugeordnete Fläche der Leistenkanten anpressenden Vorsprüngen umgreifen, d a d u r c h   g e k e n n z e i c h n e t , daß die Leistenkanten (3a) auf ihrer Länge verteilt in ihrem von den Halterschenkeln (4, 5) erfaßten Bereich einerseits und die Halterschenkel (4, 5) in ihrem die Leistenkanten erfassenden Bereich andererseits mit einander zugeordneten Rastvorsprüngen und/ oder -ausnehmungen (4b, 6b; 5c; 7, 8, 9, 10) versehen sind, die nach dem Aufsetzen des Halters (1) auf die Leiste (3) ineinandergreifen.

2. Halterung nach Anspruch 1, dadurch gekennzeichnet, daß die Leistenkanten (3a) auf ihrer Ober- und/oder Unterseite und die zugeordneten Anlageflächen (4a, 6a) der Halterschenkel (4) jeweils mit Nocken (8; 4b, 6b) versehen sind.

3. Halterung nach Anspruch 1, dadurch gekennzeichnet, daß die Leistenkanten (3a) auf ihrer Ober- und/oder Unterseite mit Rastausnehmungen (7) und die zugeordneten Anlageflächen (4a, 6a) der Halterschenkel (4) mit in die Rastausnehmungen eintretenden Rastnocken (4b, 6b) versehen sind.

4. Halterung nach Anspruch 1, dadurch gekennzeichnet, daß die Seitenfläche der Leistenkanten (3a) auf ihrer Länge mit einer Wellung (10) oder Zahnung (9) und die zugeordnete Anlagefläche (5b) der Halterschenkel (5) mit Rastnocken (5c) versehen sind.

5. Halterung nach einem der Ansprüche 1 bis 4, dadurch gekennzeichnet, daß die Halterschenkel (4, 5) die Leistenkanten (3a) mit einem sich in Leistenlängsrichtung erstreckenden Steg (6) untergreifen.

6. Halterung nach den Ansprüchen 2 oder 3 und 5, dadurch gekennzeichnet, daß der Steg (6) auf seiner Oberseite (6a) Rastnocken (6b) trägt.

7. Halterung nach einem der vorangehenden Ansprüche, dadurch gekennzeichnet, daß die Rastervorsprünge und/oder -ausnehmungen (4b, 6b) im wesentlichen in einer Horizontalebene verlaufen.

8. Halterung nach einem der vorangehenden Ansprüche, dadurch gekennzeichnet, daß die Rastervorsprünge und/oder -ausnehmungen (5c) im wesentlichen in Vertikalrichtung verlaufen.

9. Halterung nach einem der vorangehenden Ansprüche, dadurch gekennzeichnet, daß die Rastvorsprünge und/oder -ausnehmungen (4b, 6b, 5c; 7 bis 10) an einem oder an beiden Halterschenkeln (4, 5) ausgebildet sind.

0004860

*Fig.1*

**Fig.2a**

**Schnitt A-A**

**Schnitt B-B**

**Fig.2b**

**Fig.2c**

0004860

Fig.3a   Fig.3b   Fig.3c

Fig.4a   Fig.4b  Fig.4c

**Fig.5a**  **Fig.5b**  **Fig.5c**

**Fig.6a**  **Fig.6b**

0004860

EUROPÄISCHER RECHERCHENBERICHT

**Europäisches Patentamt**

Nummer der Anmeldung

EP 79 10 0584

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 2 273 571 (HAFEMEISTER)<br>* Seite 1, linke Spalte, Zeilen 5-9,44-48; Seite 5, linke Spalte, Zeilen 26-56; Figuren 21-23,32,33 *<br>-- | 1 |
| A | CH - A - 553 951 (FEIST)<br>---- | 1 |

**KLASSIFIKATION DER ANMELDUNG (Int.Cl.²)**

F 24 D 3/00
F 16 L 3/24
F 16 B 7/08

**RECHERCHIERTE SACHGEBIETE (Int. Cl.²)**

F 24 D
F 16 L
F 16 B

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 20-07-1979 | CRAB |

EPA form 1503.1 06.78